# EUROPÄISCHE PATENTANMELDUNG

(11) **EP 1 992 794 A1**
(43) Veröffentlichungstag der Anmeldung: **19.11.2008**
(21) Anmeldenummer: 07004589.3
(22) Anmeldetag: 06.03.2007
(51) Int. Cl.: F01K 23/10, F22G 1/16, F01K 3/04, F01K 3/00, F01K 3/16, F22B 3/04, F01K 3/22, F01D 19/00

(54) **Kombi-Kraftwerksanlage und Verfahren zum Betriebsstart einer Kombi-Kraftwerksanlage**

(71) Anmelder: SIEMENS AKTIENGESELLSCHAFT, 80333 München (DE)
(72) Erfinder: Gobrecht, Edwin, 40885 Ratingen (DE); Newald, Rainer, 91052 Erlangen (DE); Schmid, Erich, 91080 Marloffstein (DE)

(57) **Zusammenfassung**

Die Erfindung betrifft ein Verfahren zum Betriebsstart einer Dampfturbinenanlage (2, 94) mit einer Dampfturbine (6), einer Verbrennungskraftmaschine (4) und einem Abhitzedampferzeuger (16).

Zum Erreichen eines schnellen Betriebsstarts der Dampfturbinenanlage (2) wird vorgeschlagen, dass Restwärme des Abhitzedampferzeugers (16), die von einem Betrieb der Dampfturbinenanlage (2, 94) vor einer Betriebspause der Dampfturbinenanlage (2, 94) stammt, nach der Betriebspause und vor einem Zuführen von Wärmeenergie von der Verbrennungskraftmaschine (4) zum Abhitzedampferzeuger (16) zur Dampferzeugung verwendet wird und mit dem Dampf die Dampfturbine (6) angefahren wird.

## Beschreibung

Die Erfindung betrifft ein Verfahren zum Betriebsstart einer Dampfturbinenanlage mit einer Dampfturbine, einer Verbrennungskraftmaschine und einem Abhitzedampferzeuger. Außerdem betrifft die Erfindung eine Dampfturbinenanlage mit einer Dampfturbine, einer Verbrennungskraftmaschine und einem Abhitzedampferzeuger, der eine Dampfableitung zur Dampfturbine aufweist.

In einer Dampfturbinenanlage mit einer Dampfturbine und einer Verbrennungskraftmaschine kann Wärme aus heißen Abgasen der Verbrennungskraftmaschine zum Betrieb der Dampfturbinenanlage genutzt werden. Ist die Verbrennungskraftmaschine eine Gasturbine und die Dampfturbinenanlage dementsprechend eine GuD-Anlage (Gas- und Dampfturbinenanlage), so weist das aus der Gasturbine austretende, entspannte heiße Abgas, auch Rauchgas genannt, typischerweise noch eine Temperatur von 500°C bis 600°C auf. Zur Nutzung der in dieser Wärme enthaltenen Energie wird das Rauchgas einem der Gasturbinenanlage abgasseitig nachgeschalteten Abhitzedampferzeuger zugeführt, in dem Heizflächen in Form von Rohren oder Rohrbündeln angeordnet sind. Die Heizflächen sind wiederum in einen Wasser-Dampf-Kreislauf der Dampfturbinenanlage geschaltet, welcher mindestens eine, zumeist jedoch mehrere Druckstufen aufweist. Die Druckstufen unterscheiden sich dadurch voneinander, dass das den Heizflächen zur Dampferzeugung zugeführte Wasser verschiedene Druckniveaus aufweist.

Zum Starten einer solchen Dampfturbinenanlage wird üblicherweise zunächst die Verbrennungskraftmaschine, bei einer GuD-Anlage die Gasturbine, gestartet, indem die Gasturbine auf eine bestimmte Drehzahl hoch geschleppt wird, beispielsweise durch einen Anfahrumrichter. Ist die Drehzahl erreicht, wird verdichtete Luft mit einem gasförmigen oder flüssigen Brennstoff, beispielsweise Erdgas oder Erdöl, vermischt und verbrannt. Die unter Druck stehenden Abgase werden im Turbinenteil der Gasturbine unter Verrichtung von Arbeit entspannt, und die Abgase werden dem Abhitzedampferzeuger zugeführt. Der im Abhitzedampferzeuger erzeugte Dampf wird jedoch zunächst nicht der Dampfturbine zugeführt, sondern wird über Umleitstationen an der Dampfturbine vorbei und direkt einem Kondensator zugeführt, welche den Dampf zu Wasser kondensiert. Das Kondensat wird wieder als Speisewasser dem Dampferzeuger zugeführt. In manchen Ausführungsvarianten von Dampfturbinenanlagen wird der umgeleitete Dampf auch der Atmosphäre direkt zugeführt.

Das Herumführen von zunächst relativ kaltem Dampf um die Dampfturbine hat den Sinn, Spannungen in dickwandigen Bauteilen der Dampfturbine möglichst gering zu halten. Denn eine Dampfturbine ist üblicherweise auch nach einer beispielsweise 8-stündigen Betriebspause noch so heiß, dass das Einleiten von relativ kühlem Dampf in die noch heiße Dampfturbine zu einem starken Abkühlen der dickwandigen Bauteile führen würde. Da der Abhitzedampferzeuger während einer Betriebspause meist wesentlich schneller auskühlt, ist der im Abhitzedampferzeuger zunächst erzeugte Dampf in der Regel zu kühl, um ohne eine starke Materialbeanspruchung zu verursachen direkt der Dampfturbine zugeführt werden zu können. Erst dann, wenn bestimmte Dampfparameter in den Dampfleitungen des Wasser-Dampf-Kreislaufs erreicht sind, wird der Dampf der Dampfturbine zugeführt und diese somit gestartet.

Zum Erreichen dieser gewünschten und möglichst schwankungsarmen Drücke und Temperaturen von Betriebsdampf wird die Gasturbine vor dem Start der Dampfturbine in der Regel so lange auf einer bestimmten Teillast gehalten, bis sich stationäre Zustände in der Gasturbine und im Dampfsystem eingestellt haben. Erst wenn eine stabile Dampfproduktion im Abhitzedampferzeuger erreicht ist, wird der im Dampfsystem befindliche Dampf der Dampfturbine zugeleitet und diese gestartet. Nun wird die Drehzahl der Dampfturbine so lange gesteigert, bis sie die Drehzahl der Gasturbine erreicht. Nun kann beispielsweise nach erfolgter Synchronisation eine Kupplung zwischen dem Läufer der Dampfturbine und dem Läufer der Gasturbine geschlossen werden, wodurch die beiden Läufer starr miteinander verbunden sind und als so genannte Einwellenanlage betrieben werden können.

Dieser Startvorgang der Dampfturbinenanlage ist zeitaufwändig, was insbesondere dann von Nachteil ist, wenn die Dampfturbinenanlage häufig an- und abgefahren wird. Bedingt durch die immer höher werdende Flexibilität des Strommarkts wird in immer verstärkterem Maße eine variable Leistungsabgabe der Kraftwerke verlangt. Hierdurch werden Teile der Kraftwerke, beispielsweise eine von mehreren Gas- und Dampfturbinenanlagen, immer häufiger an- und abgefahren.

Zur Beschleunigung eines Betriebsstarts einer Gas- und Dampfturbinenanlage ist es aus der WO 2006/106075 A1 bekannt, den vom Abhitzedampferzeuger zuerst erzeugten Dampf unmittelbar der Dampfturbine zuzuführen und Spannungen in dickwandigen Bauteilen der Dampfturbine dadurch zumindest teilweise zu kompensieren, dass bei der anschließenden Steigerung der Dampftemperaturen ein Temperaturgradient gering gehalten wird.

Es ist die Aufgabe der vorliegenden Erfindung, eine Dampfturbinenanlage und ein Verfahren zum Betriebsstart einer Dampfturbinenanlage anzugeben, mit denen ein schneller und Material schonender Betriebsstart erreicht werden kann.

Bezüglich des Verfahrens wird die Aufgabe durch ein Verfahren der eingangs genannten Art gelöst, bei dem erfindungsgemäß Restwärme des Abhitzedampferzeugers, die von einem Betrieb der Dampfturbinenanlage vor einer Betriebspause der Dampfturbinenanlage stammt, nach der Betriebspause und vor einem Zuführen von Wärmeenergie von der Verbrennungskraftmaschine zum Abhitzedampferzeuger zur Dampferzeugung verwendet wird und mit dem Dampf die Dampfturbine angefahren wird. Die Dampfturbine kann hierdurch sehr schnell und unabhängig von der Verbrennungskraftmaschine gestartet und zügig zu einer Energieerzeugung herangezogen werden.

Die Temperatur des erzeugten Dampfs ist hierbei abhängig von der Menge der Restwärme im Abhitzedampferzeuger und davon, in welcher Druckstufe des Abhitzedampferzeugers der Dampf erzeugt wird. Die Menge der Restwärme im Abhitzedampferzeuger ist abhängig von der Dauer der Betriebspause und beispielsweise von flankierenden Maßnahmen, wie einer Wärmekonservierung im Abhitzedampferzeuger. Auch ein Nacherhitzen bzw. Überhitzen des aus der Restwärme erzeugten Dampfs durch ein zum Abhitzedampferzeuger zusätzliches Heizmittel ist denkbar.

Unter einem Betriebsstart kann in diesem Zusammenhang ein Anfahren der Dampfturbinenanlage von einem Ruhezustand der Dampfturbine bis zu einem Betriebszustand der Dampfturbine verstanden werden, in dem die Dampfturbine mit einer gewünschten Last Energie erzeugt, beispielsweise in einer Grundlast oder Teillast. Das Ende des Betriebsstarts kann auch dadurch definiert werden, dass die Verbrennungskraftmaschine eine gewünschte Last, beispielsweise die Grundlast erreicht. Das Anfahren ist hierbei ein Beschleunigen des Läufers der Dampfturbine während des Betriebsstarts, insbesondere aus einem Ruhezustand heraus. Während der Betriebspause findet keine Energieerzeugung der Dampfturbinenanlage statt, insbesondere ruhen der Läufer der Dampfturbine und insbesondere auch die Verbrennungskraftmaschine bzw. deren Läufer, oder sie sind in einem so genannten nicht Energie erzeugenden Drehbetrieb, der ebenfalls der Betriebspause zugerechnet wird. Die Verbrennungskraftmaschine kann eine beliebige Maschine sein, in der Brennstoff verbrannt bzw. heißes Abgas erzeugt wird. Sie ist zweckmäßigerweise eine Gasturbine, so dass die Dampfturbinenanlage eine Gas- und Dampfturbinenanlage ist.

In einer vorteilhaften Ausführungsform der Erfindung wird der Dampf erzeugt, indem zumindest ein Teil des während der Betriebspause unter Druck im Abhitzedampferzeuger gelagerten Wassers entspannt wird. Durch die Entspannung wird der Siedepunkt des die Restwärme enthaltenden Wassers gesenkt, so dass der Dampf erzeugt wird, der zum Anfahren der Dampfturbine verwendet wird. Durch die Speicherung der Restwärme im Abhitzedampferzeuger im unter Druck stehenden Wasser kann sehr viel mehr Restwärme im Abhitzedampferzeuger gespeichert werden als bei einer direkten Speicherung der Restwärme in im Abhitzedampferzeuger gespeichertem Dampf.

Zweckmäßigerweise umfasst die Dampfturbine eine Hochdruck-, Mitteldruck- und Niederdruckstufe. Je nach erhaltener Restwärme bzw. Temperatur des erzeugten Dampfs kann der Dampf einer der Stufen der Dampfturbine zugeleitet und hierdurch eine effiziente Energieausnutzung des Dampfs erreicht werden.

Auf eine außerhalb des Abhitzedampferzeugers stattfindende Überhitzung des aus der Restwärme erzeugten Dampfs kann verzichtet werden, wenn die Dampfturbine eine Niederdruckstufe und eine Stufe höheren Drucks aufweist und der erzeugte Dampf in die Niederdruckstufe geleitet wird. Durch den geringen Druck kann der Dampf sehr weit entspannt werden ohne die Gefahr einer die Dampfturbine stark beanspruchenden Kondensation des Dampfs.

Vorteilhafterweise umfasst der Abhitzedampferzeuger eine Niederdruckstufe und eine Stufe höheren Drucks, beispielsweise eine Mitteldruck- und/oder Hochdruckstufe, wodurch je nach benötigter Dampftemperatur der geeignetste Bereich des Abhitzedampferzeugers zur Erzeugung des Dampfs aus der Restwärme herangezogen werden kann.

Eine hohe Energieausbeute aus der Restwärme des Abhitzedampferzeugers kann erreicht werden, wenn Restwärme zur Dampferzeugung von einer Stufe höheren Drucks in die Niederdruckstufe verschoben wird. So kann beispielsweise Restwärme aus einer Hochdruck- oder Mitteldruckstufe in die Niederdruckstufe geführt werden und hierdurch - gegebenenfalls weiterer - Dampf erzeugt und der Niederdruckstufe der Dampfturbine zugeführt wird. So kann, selbst wenn die Niederdruckstufe des Abhitzedampferzeugers nicht mehr genug Restwärme aufweist, die Dampfturbine dennoch angefahren werden.

In einer weiteren vorteilhaften Ausgestaltung der Erfindung fährt die Dampfturbine die Verbrennungskraftmaschine mit der Energie aus der Restwärme an, insbesondere synchron. Die Verbrennungskraftmaschine, zweckmäßigerweise eine Gasturbine, kann von der Dampfturbine hochgeschleppt werden und es kann auf ein separates Anfahrmittel, beispielsweise einen Anfahrumrichter oder Startermotor, verzichtet werden. Zusätzlich kann die Dampfturbinenanlage zügig angefahren werden, da die Dampfturbine und die Verbrennungskraftmaschine nicht hintereinander angefahren werden müssen. Bei einem synchronen Anfahren, beispielsweise durch eine einfach zu realisierende starre Läuferkupplung, werden der Läufer der Dampfturbine und der Läufer der Verbrennungskraftmaschine mit gleicher Drehzahl gedreht und zusätzlich beschleunigt.

Ein synchrones Anfahren kann einfach und steuerungstechnisch zuverlässig erreicht werden, wenn ein Läufer der Dampfturbine während des Anfahrens mit einem Läufer der Verbrennungskraftmaschine mittels einer Welle starr verbunden ist. Die starre Verbindung kann bereits vor einem Betrieb der Verbrennungskraftmaschine bestehen. Die starre rotatorische Verbindung kann durch eine starr durchgehende Welle oder durch das Schließen einer Wellenkupplung erreicht werden. Insbesondere besteht die starre Verbindung bereits bei einem ersten Anfahren, also bei einem Andrehen der Läufer aus einer Ruheposition.

Ein besonders schneller Betriebsstart der Dampfturbinenanlage kann erreicht werden, wenn die Dampfturbine die Verbrennungskraftmaschine unter Verwendung der Energie aus der Restwärme anfährt. Das Anfahren kann durch ein Hochschleppen geschehen. Hierbei kann ein Verbrennungsprozess in der Verbrennungskraftmaschine zum Betriebsstart der Verbrennungskraftmaschine bereits kurz vor oder erst nach einem Beginn des Hochschleppens erfolgen.

In einer weiteren vorteilhaften Variante der Erfindung wird der aus der Restwärme erzeugte Dampf durch ein zum Abhitzedampferzeuger zusätzliches Heizmittel überhitzt. Es kann auch bei einer relativ geringen Restwärme im Abhitzedampferzeuger ein zügiger Betriebsstart der Dampfturbinenanlage erreicht werden. Außerdem kann eine Kondensation von Betriebsdampf in der Dampfturbine wirksam vermieden werden.

Zweckmäßigerweise wird der überhitzte Dampf einer Mitteldruckstufe der Dampfturbine zugeleitet. Hierfür ist eine mäßige Überhitzung des Dampfs ausreichend und es kann auf eine starke Überhitzung, die für eine Zuleitung des Dampfs in eine Hochdruckstufe der Dampfturbine zweckmäßig wäre, verzichtet werden, und es kann Energie eingespart werden.

Üblicherweise ist nach einem Betrieb der Dampfturbinenanlage die größte Wärmemenge in einer Hochdruckstufe des Abhitzedampferzeugers gespeichert. Dieser kann besonders einfach zum Betriebsstart der Dampfturbine verwendet werden, wenn der Dampf zum Anfahren der Dampfturbine in einer Hochdruckstufe des Abhitzedampferzeugers erzeugt wird.

In einer weiteren Ausführungsform der Erfindung wird vorgeschlagen, dass während der Betriebspause eine dem Abhitzedampferzeuger im Rauchstromgas der Verbrennungskraftmaschine nachgeschaltete Rauchgasklappe zum Stoppen des Rauchgasstroms geschlossen ist. Die Menge von den Abhitzedampferzeuger durchströmender kalter Luft kann reduziert werden, was einer Konservierung der Restwärme im Abhitzedampferzeuger förderlich ist. Die Rauchgasklappe muss hierbei nicht während der gesamten Betriebspause geschlossen sein, sondern kann beispielsweise zur Ableitung von Überdruck im Abhitzedampferzeuger bzw. der Gasturbine intervallartig geöffnet werden.

Vorteilhafterweise ist zusätzlich eine Rauchgasklappe im Rauchgasstrom vor dem Abhitzedampferzeuger geschlossen, so dass die im Abhitzedampferzeuger befindliche Luft eingeschlossen ist. Hierdurch kann die Restwärme besonders gut erhalten werden.

Um eine Auskühlung der Gasturbine bei einem verschlossenen Abhitzedampferzeuger gewährleisten zu können, ist es vorteilhaft, wenn während der Betriebspause die Verbrennungskraftmaschine durchströmendes Gas aus einer von der Verbrennungskraftmaschine zum Abhitzedampferzeuger führenden Abgasleitung abgezweigt wird zur Umgehung des Abhitzedampferzeugers. Kühlluft kann die Verbrennungskraftmaschine bzw. die Gasturbine durchströmen und kühlt nicht den Abhitzedampferzeuger aus.

Um nach der Betriebspause möglichst viel Restwärme im Abhitzedampferzeuger zur Verfügung stehen zu haben ist es vorteilhaft, wenn dem Abhitzedampferzeuger vor der Betriebspause über das für den eingestellten Betrieb der Dampfturbinenanlage nötige Maß Wärme zugeführt wird und die Wärme zumindest im Wesentlichen bis zur Betriebspause im Abhitzedampferzeuger gespeichert bleibt. Damit ist ein hoher Energiegehalt im Abhitzedampferzeuger im Moment des Abstellens der Anlage gegeben.

Die auf die Dampfturbinenanlage gerichtete Aufgabe wird von einer Dampfturbinenanlage der eingangs genannten Art gelöst, die erfindungsgemäß ein zum Abhitzedampferzeuger zusätzliches Heizmittel zum Heizen von Dampf für die Dampfturbine aufweist, das dampfeingangsseitig mit der Dampfableitung verbunden ist. Im Abhitzedampferzeuger gebildeter Dampf kann dampfeingangsseitig in das Heizmittel geführt und dort überhitzt werden, so dass unter Ausnutzung von Restwärme des Abhitzedampferzeugers genügend heißer Dampf zur Verfügung steht, um die Dampfturbine zügig anzufahren und eine Kondensation von Dampf in der Dampfturbine und damit eine Abkühlung von Dampfturbinenbauteilen zu vermeiden. Dies ist besonders bei einer langen Betriebspause bzw. einer geringen Restwärme im Abhitzedampferzeuger von Vorteil.

Das Heizmittel kann elektrisch betrieben sein und dient zum Überhitzen des Dampfs für die Dampfturbine. Das Heizmittel ist dampfeingangsseitig, also mit seinem Eingang zum Eintritt des zu heizenden Dampfs in das Heizmittel, mit der Dampfableitung aus dem Abhitzedampferzeuger verbunden. Dampfausgangsseitig kann das Heizmittel direkt oder indirekt mit der Dampfturbine verbunden sein.

Vorteilhafterweise ist das Heizmittel dampfausgangsseitig mit einer Dampfzuleitung zu einem Mitteldruckteil der Dampfturbine verbunden. Durch eine Zuleitung von überhitztem Dampf zum Mitteldruckteil kann ein zügiger Betriebsstart der Dampfturbinenanlage bereits mit einer mäßigen Überhitzung des Dampfs erreicht werden.

Zweckmäßigerweise ist die Dampfableitung von dem Abhitzedampferzeuger eine Leitung von einem Hochdrucküberhitzer des Abhitzedampferzeugers. Hierdurch kann im Hochdruckteil des Abhitzedampferzeugers erzeugter und bereits sehr heißer Dampf zum Heizmittel geführt werden, wodurch ein nur geringes weiteres Erhitzen des Dampfs für eine ausreichende Überhitzung notwendig ist.

Ein energetisch günstiger Anschluss des Heizmittels am Abhitzedampferzeuger kann erreicht werden, wenn das Heizmittel dampfeingangsseitig mit einem Dampfbypass zwischen einem Hochdrucküberhitzer und einem Überhitzer einer niedrigeren Druckstufe des Abhitzedampferzeugers, beispielsweise einen Zwischenüberhitzer zu einer Mitteldruckstufe der Dampfturbine, verbunden ist.

Eine energieeffiziente Überhitzung des aus der Restwärme erzeugten Dampfs kann erreicht werden, wenn das Heizmittel zwei unabhängig voneinander betreibbare Heizeinheiten aufweist, die dampfeingangsseitig mit unterschiedlichen Druckstufen des Abhitzedampferzeugers verbunden sind. So kann beispielsweise Dampf aus einem Hochdrucküberhitzer und Dampf aus einem Zwischenüberhitzer durch das Heizmittel überhitzt werden, so dass zwei unterschiedliche Druckstufen der Dampfturbine, beispielsweise eine Hochdruckstufe und eine Mitteldruckstufe, gleichzeitig oder nacheinander mit überhitztem Dampf aus dem Heizmittel versorgt werden können.

Zum Halten des Abhitzedampferzeugers auf einem gewünschten Temperaturniveau kann die Dampfturbinenanlage eine Standbyheizung zum Heizen des Abhitzedampferzeugers während einer Betriebspause umfassen. Hierdurch kann die Temperatur des Abhitzedampferzeugers so gehalten werden, dass ein zügiger Betriebsstart der Dampfturbinenanlage gewährleistet ist. Ein Heizelement kann eingespart und ein Synergieeffekt zwischen der Standbyheizung und dem Heizmittel erreicht werden, wenn das Heizmittel zum Wärmebezug mit der Standbyheizung verbunden ist. Der aus der Restwärme erzeugte Dampf kann im Heizmittel durch einen Wärmeeintrag von der Standbyheizung in das Heizmittel überhitzt werden. Hierzu ist das Heizmittel zweckmäßigerweise in einer Heizleitung der Standbyheizung zum Wärmebezug aus der Standbyheizung angeordnet, also heizeingangsseitig mit der Standbyheizung verbunden.

In einer anderen Ausführungsform der Erfindung ist das Heizmittel zum Wärmebezug mit einer weiteren Wärmekraftanlage verbunden, beispielsweise einem Strang einer benachbarten Dampfturbinenanlage.

Eine Konservierung der im Abhitzedampferzeuger enthaltenen Restwärme kann besonders einfach durch einen Abgasauslass aus einer von der Verbrennungskraftmaschine zum Abhitzedampferzeuger führenden Abgasleitung erreicht werden. Der Abgasauslass kann ein kleiner Kamin sein zum Auslassen von Abgas oder Kühlgas aus der Verbrennungskraftmaschine.

Einer Konservierung der Restwärme im Abhitzedampferzeuger ist es außerdem zuträglich, wenn die Dampfturbinenanlage ein Verschlussmittel zum - mit Bezug zum Abgasstrom - beidseitigen Verschließen des Abhitzedampferzeugers während einer Betriebspause aufweist. Das Verschließen des Abhitzedampferzeugers mit Hilfe des Verschlussmittels kann vor oder in der Betriebspause erfolgen.

Die Erfindung wird anhand von Ausführungsbeispielen näher erläutert, die in den Zeichnungen dargestellt sind.

Es zeigen:
FIG 1 eine Gas- und Dampfturbinenanlage mit einem Abhitzedampferzeuger und einem Heizmittel zum Überheizen von aus dem Abhitzedampferzeuger ausgespeichertem Dampf,
FIG 2 eine Gas- und Dampfturbinenanlage mit einem Heizmittel, das zwei unabhängig voneinander betreibbare Heizeinheiten an verschiedenen Druckstufen des Abhitzedampferzeugers umfasst, und
FIG 3 ein Diagramm, das Anfahrprozesse während eines Betriebsstarts einer Gas- und Dampfturbinenanlage über der Zeit zeigt.

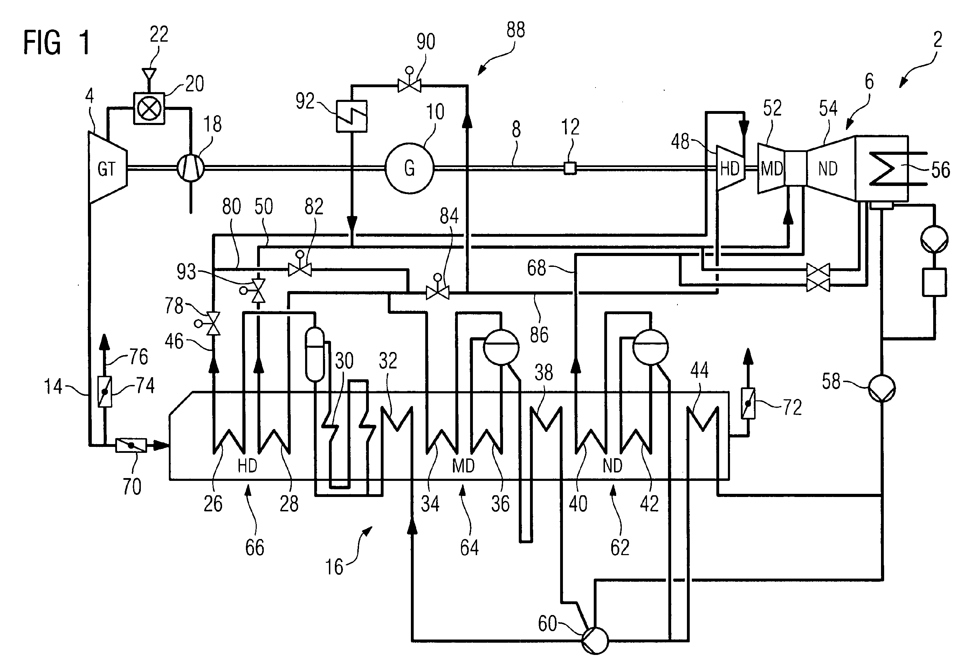

FIG 1 zeigt eine Dampfturbinenanlage 2, die als Gas- und Dampfturbinenanlage ausgeführt ist, und die als Verbrennungskraftmaschine 4 eine Gasturbine umfasst sowie eine Dampfturbine 6. Über eine Welle 8 sind ein Läufer der Gasturbine, ein Läufer eines Generators 10 und ein Läufer der Dampfturbine 6 miteinander gekoppelt, wobei der Läufer der Dampfturbine 6 und der Läufer des Generators 10 über eine Kupplung 12 rotatorisch voneinander trennbar und koppelbar sind. Die Läufer des Generators 10 und der Gasturbine sind über die Welle 8 starr miteinander verbunden. Ein Rauchgasauslass der Gasturbine ist über eine Abgasleitung 14 mit einem Abhitzedampferzeuger 16 verbunden, der zur Erzeugung des Betriebsdampfs der Dampfturbine 6 aus Abwärme der Gasturbine vorgesehen ist.

Während eines Betriebs der Gas- und Dampfturbinenanlage wird vom rotierenden Läufer der Gasturbine über die Welle 8 ein Verdichter 18 angetrieben, der Verbrennungsluft aus der Umgebung ansaugt und einer Brennkammer 20 zuführt. Dort wird die Verbrennungsluft mit von einer Brennstoffzuführung 22 herangeführtem Brennstoff vermischt und verbrannt und die heißen, unter Druck stehenden Abgase werden der Gasturbine zugeführt und dort unter Leistung von Arbeit entspannt. Die noch etwa 500 bis 600°C heißen Abgase werden anschließend durch die Abgasleitung 14 dem Abhitzedampferzeuger 16 zugeführt und durchströmen diesen, bis sie durch einen Kamin 24 in die Umgebung gelangen. Auf ihrem Weg durch den Abhitzedampferzeuger 16 führen sie ihre Wärme einem Hochdrucküberhitzer 26 zu, dann einem Hochdruck-Zwischenüberhitzer 28, einem Hochdruckverdampfer 30, einem Hochdruckvorwärmer 32, dann einem Mitteldrucküberhitzer 34, einem Mitteldruckverdampfer 36, einem Mitteldruckvorwärmer 38, dann einem Niederdrucküberhitzer 40, einem Niederdruck-Verdampfer 42 und schließlich einem Kondensatvorwärmer 44.

Im Hochdrucküberhitzer 26 überhitzter Dampf wird durch eine Dampfableitung 46 einer Hochdruckstufe 48 der Dampfturbine 6 zugeführt und dort unter Leistung von Arbeit entspannt. Mit der Arbeit wird - analog zur in der Gasturbine geleisteten Arbeit - die Welle 8 und damit der Generator 10 zur Erzeugung elektrischer Energie bewegt. Der in der Hochdruckstufe 48 teilweise entspannte heiße Dampf wird anschließend dem Hochdruck-Zwischenüberhitzer 28 zugeführt, dort erneut erhitzt und über eine Ableitung 50 bzw. einer Dampfzuleitung einer Mitteldruckstufe 52 der Dampfturbine 6 zugeführt und dort unter Leistung von mechanischer Arbeit entspannt. Der dort teilweise entspannte Dampf wird über eine interne Zuleitung einer Niederdruckstufe 54 der Dampfturbine zugeführt und dort unter Abgabe von mechanischer Energie weiter entspannt.

Der entspannte Dampf wird im Kondensator 56 der Dampfturbine 6 kondensiert, und das so entstehende Kondensat wird über eine Kondensatpumpe 58 direkt einer Niederdruckstufe 62 des Abhitzedampferzeugers 16 oder über eine Zuführpumpe 60 - und von dieser mit entsprechendem Druck versehen - einer Mitteldruckstufe 64 oder einer Hochdruckstufe 66 des Abhitzedampferzeugers 16 zuführt, wo das Kondensat verdampf wird. Nach einer Dampferzeugung und Überhitzung wird der Dampf über die entsprechenden Ableitungen 46, 50, 68 des Abhitzedampferzeugers 16 wieder der Dampfturbine 6 zur Entspannung und Verrichtung mechanischer Arbeit zugeführt.

Wird der Betrieb der Dampfturbinenanlage 2 unterbrochen, so wird die Verbrennung in der Verbrennungskraftmaschine 4 bzw. Gasturbine beendet, so dass dem Abhitzedampferzeuger 16 keine heißen Abgase mehr zur Erzeugung von Dampf für die Dampfturbine 6 zugeführt werden. Im Abhitzedampferzeuger 16 ist hierbei jedoch noch der normale, in Betrieb der Dampfturbinenanlage 2 im Abhitzedampferzeuger 16 befindliche Wärmegehalt vorhanden. Zum Erhalt dieser Wärmeenergie werden zwei Abgasklappen 70, 72 bezüglich zum Abgasstrom beidseitig des Abhitzedampferzeugers 16 geschlossen und eine Abgasklappe 74 geöffnet, so dass aus der Gasturbine strömendes Gas durch einen kleinen als Kamin ausgeführter Abgasauslass 76 der Dampfturbinenanlage 2 entweichen kann. Auf diese Weise kann die Gasturbine mit Kühlluft gekühlt werden, ohne dass diese durch den Abhitzedampferzeuger 16 treten muss und diesen abkühlt.

In einer einfacheren Variante der Erfindung ist es möglich, nur die Abgasklappe 72 vorzusehen und diese nach Betriebsende, also zu Beginn der Betriebspause, zu verschließen, wobei hierbei ein Überdruckmittel in der Abgasklappe 72 dafür sorgt, dass durch die Gasturbine kein zu hoher Abgasdruck oder Kühlluftdruck im Abhitzedampferzeuger 16 erzeugt wird und dieser Druck durch die Abgasklappe 72 entweichen kann, die durch das Überdruckmittel bei entsprechendem Druck geöffnet und anschließend sofort wieder verschlossen wird.

Auf diese Weise nimmt die im Abhitzedampferzeuger 16 gespeicherte Wärmeenergie im Laufe der Zeit nur wenig ab, beispielsweise durch Wärmeabstrahlung des Abhitzedampferzeugers 16, so dass nach einer Betriebspause von beispielsweise acht Stunden noch eine große Restwärme im Abhitzedampferzeuger 16 vorhanden ist.

Soll die Gas- und Dampfturbinenanlage nach der Betriebspause wieder gestartet werden, so wird ein Ventil 78, beispielsweise in der Dampfableitung 46 des Abhitzedampferzeugers 16, geöffnet, so dass der Druck in der Hochdruckstufe 66 verringert wird. Hierdurch kann heißes und unter hohem Druck in der Hochdruckstufe 66 gelagertes Wasser entspannen und hierdurch durch das Absinken des Siedepunkts Dampf bilden. Dieser Dampf tritt durch die Dampfableitung 46 und weiter durch einen Dampfbypass 80, dessen Ventil 82 zum Starten der Gas- und Dampfturbinenanlage ebenfalls geöffnet wird. Durch ein weiteres geöffnetes Ventil 84 in einer Zwischenüberhitzerleitung 86 des Hochdruck-Zwischenüberhitzers 28 wird der Dampf einem Heizmittel 88 zugeführt mit einem Ventil 90 und einem Wärmetauscher 92.

Das Heizmittel 88 ist dampfeingangsseitig, also dort wo der Dampf aus der Dampfableitung 46 dem Heizmittel 88 zugeführt wird, mit dem Dampfbypass 80 zwischen dem Hochdrucküberhitzer 26 und dem Hochdruck-Zwischenüberhitzer 28, der eine niedrigere Druckstufe aufweist als der Hochdrucküberhitzer 26, verbunden.

Der Wärmetauscher 92 ist beispielsweise elektrisch beheizt. Auch eine Beheizung über ein Speichermedium, beispielsweise ein Keramikspeicher oder ein Metallspeicher, ist denkbar, das durch heiße Abgase aus der Verbrennungskraftmaschine 4 oder durch heißen Dampf vor der Betriebspause erhitzt wird. Der Wärmetauscher 92 überhitzt den Dampf, der nun der Ableitung 50 des Hochdruck-Zwischenüberhitzers 28 und damit der Mitteldruckstufe 52 der Dampfturbine 6 zugeführt wird. Auf diese Weise wird aus der Abwärme des Abhitzedampferzeugers 16 gebildeter Dampf durch das externe Heizmittel 88 zwischenüberhitzt, so dass nun ausreichend heißer Dampf zum Betrieb der Mitteldruckstufe 52 der Dampfturbine 6 zur Verfügung steht.

Durch den in der Mitteldruckstufe 52 Arbeit verrichtende und sich entspannende Dampf wird die Dampfturbine 6 angefahren, deren Läufer beginnt zu drehen, bzw. wird - z.B. bei einem Drehbetrieb in der Betriebspause - beschleunigt. Hierbei kann die Kupplung 12 zwischen dem Läufer der Dampfturbine 6 und dem Läufer der Gasturbine bereits bei beginnender Rotationsbewegung geschlossen sein, so dass mit der ersten Rotation bzw. Beschleunigung des Läufers der Dampfturbine 6 auch der Läufer der Gasturbine in Bewegung versetzt bzw. beschleunigt wird. Auf diese Weise schleppt die Dampfturbine 6 die Gasturbine hoch, und die Dampfturbine 6 und die Verbrennungskraftmaschine 4 starten vollständig synchron. Der Generator 10 läuft hierbei zweckmäßigerweise zunächst ohne Last mit.

Wird durch dieses so genannte Ausspeichern von Restwärme aus dem Abhitzedampferzeuger 16 und zusätzliches Heizen durch das Heizmittel 88 eine genügend hohe Drehzahl der Welle 8 erreicht, so kann die Gasturbine bzw. die Verbrennung in der Brennkammer 20 gestartet werden, so dass dem Abhitzedampferzeuger 16 neue Wärme zugeführt wird. Hierzu, oder bereits vorher, werden die Abgasklappen 70, 72 geöffnet und die Abgasklappe 74 geschlossen, so dass das heiße, aus der Gasturbine austretende Abgas durch den Abhitzedampferzeuger 16 geführt wird. Hierdurch wird die Hochdruckstufe 66 des Abhitzedampferzeugers 16 und insbesondere der Hochdrucküberhitzer 26 weiter erwärmt, so dass immer mehr heißer Dampf aus der Dampfableitung 46 austritt und direkt zur Hochdruckstufe 48 der Dampfturbine gelangt und diese weiter antreibt. Der in der Hochdruckstufe 48 teilweise entspannte Dampf gelangt durch die Zwischenüberhitzer-Leitung 86 zum Ventil 84 und baut da einen Gegendruckstrom aus der Bypass-Leitung 80 auf. Ist dieser Gegendruck größer als der Druck im Strom aus der Bypass-Leitung 80, so findet eine Dampfrichtungsumkehr im Ventil 84 statt, das Ventil 82 in der Bypass-Leitung 80 kann geschlossen werden, so dass der Dampf seinen üblichen Betriebsweg nimmt. Ein Ventil 93 kann, ggf. weiter, geöffnet werden, so dass der Dampfstrom aus dem Hochdruck-Zwischenüberhitzer 28 seinen im Betrieb üblichen Verlauf nimmt.

Das Heizmittel 88 wird in seiner Heizleistung reduziert, sobald der Dampf aus dem Hochdruck-Zwischenüberhitzer 28 eine vorbestimmte Dampftemperatur erreicht hat. Nach weiterer Erwärmung des Dampfs kann das Heizmittel 88 vollständig abgeschaltet werden.

Der Dampfbypass 80 wird nach dem Start der Dampfturbine 6 dazu benutzt, um die Temperatur des Hochdruck-Zwischenüberhitzers 28 durch Mischen von kaltem und heißem Zwischenüberhitzerdampf so einzuregeln, dass die Dampfturbine 6 ermüdungsschonend langsam auf höhere Temperaturen gefahren werden kann.

In einer einfacheren Ausführungsform der Erfindung kann zum Anfahren der Dampfturbine 6 nach einer Betriebspause der Dampfturbinenanlage 2 Energie aus der Restwärme des Abhitzedampferzeugers 16 aus der Niederdruckstufe 62 des Abhitzedampferzeugers 16 verwendet werden. Hierzu wird ein entsprechendes Ventil, beispielsweise in der Ableitung 68 geöffnet, Wasser in der Niederdruckstufe 62 wird entspannt und Dampf wird gebildet, der der Niederdruckstufe 54 der Dampfturbine 6 zugeführt wird. Um ein ungewünschtes Ventilieren der Turbine der Mitteldruckstufe 52 zu vermeiden, sollte die Niederdruckstufe 54 von der Mitteldruckstufe 52 mit entsprechenden Absperrmitteln getrennt werden.

Ist die Energiemenge in der Niederdruckstufe 62 alleine nicht genug zum Anfahren der Dampfturbine 6, können die Abgasklappen 70, 72 geöffnet und beispielsweise Luft durch den Abhitzedampferzeuger 16 gedrückt werden. Heiße Luft aus der Hochdruckstufe 66 und der Mitteldruckstufe 64 wird zur Niederdruckstufe 62 geführt, die von der Luft erwärmt wird. Auf diese Weise wird Restwärme zur Dampferzeugung von der Mitteldruckstufe 64 und/oder der Hochdruckstufe 66 in die Niederdruckstufe 62 verschoben. Auf das Heizmittel 88 kann verzichtet werden.

Die von der Dampfturbine 6 hochgeschleppte Verbrennungskraftmaschine 4, die hierbei zunächst ohne eigenen Betrieb ist, trägt nach der eigenen Zündung durch ihr Abgas zum Wärmeeintrag in den Abhitzedampferzeuger 16 bei, durch den die Leistung der Dampfturbine 6 erhöht werden kann. Hierdurch wird die Drehzahl der beiden Aggregate und deren Leistung erhöht, bis die Verbrennungskraftmaschine - und bei synchronem Anfahren auch die Dampfturbine 6 - ihre Nenndrehzahl erreicht, wodurch das Anfahren der Dampfturbinenanlage 2 abgeschlossen ist. Nun, oder bereits vorher, kann Last auf den Generator 10 zugeschaltet werden, so dass elektrische Energie erzeugt wird.

Selbstverständlich kann zum Anfahren der Dampfturbine 6 sowohl Dampf in die Mitteldruckstufe 54 mit Hilfe des Heizmittels 88 als auch in die Niederdruckstufe 54 geleitet werden.

Durch das Ausspeichern von Restwärme aus dem Abhitzedampferzeuger 16 und das synchrone Hochfahren der Dampfturbine 6 und der Verbrennungskraftmaschine 4 kann die Dampfturbinenanlage 2 sehr schnell gestartet werden, und es kann zügig elektrische Energie gewonnen werden. Der Betriebsstart kann weiter beschleunigt werden, wenn die Verbrennungskraftmaschine 4 bereits angefahren wird, also durch ein Hilfsmittel wie einen Anfahrumrichter hochgefahren wird, während die Dampfturbine 6 durch Ausspeichern von Energie angefahren wird. Hierbei kann die Verbrennungskraftmaschine 4 ebenfalls vollständig synchron oder bei nicht geschlossener Kupplung 12 weitgehend mit gleicher Geschwindigkeit hochgefahren werden.

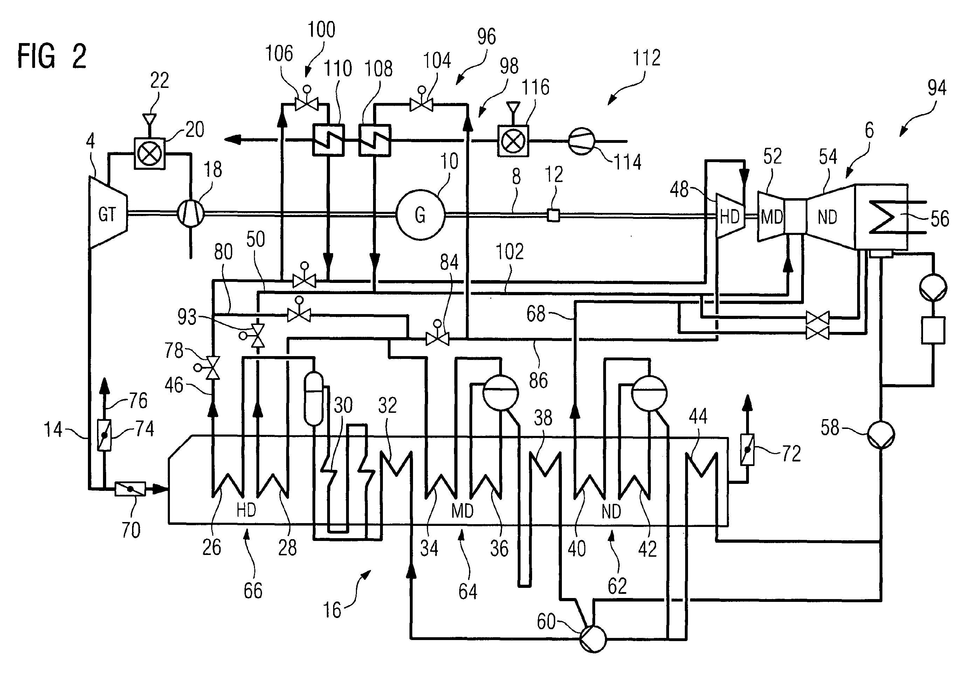

FIG 2 zeigt eine alternative, ebenfalls als Gas- und Dampfturbine ausgeführte Dampfturbinenanlage 94 mit einem Heizmittel 96, das zwei eigenständig betreibbare Heizeinheiten 98, 100 aufweist. Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Bauteile werden grundsätzlich mit den gleichen Bezugszeichen beziffert.

Der Betriebsstart der Dampfturbinenanlage 94 kann hierbei wie oben beschrieben eingeleitet werden, so dass Wasser aus der Hochdruckstufe 66 des Abhitzedampferzeugers 16 unter Dampfbildung entspannt wird. Der Dampf wird durch den Dampfbypass 80, das Ventil 84 und die Zwischenüberhitzer-Leitung 86 der ersten Heizeinheit 98 zugeführt, die den Dampf überhitzt und durch eine Dampfzuleitung 102 der Mitteldruckstufe 52 der Dampfturbine 6 zuführt. Zusätzlich wird durch die Ausspeicherung gewonnener Dampf direkt aus der Dampfableitung 46 der Hochdruckstufe 66 des Abhitzedampferzeugers 16 der zweiten Heizeinheit 100 zugeführt, dort überhitzt und zur Arbeitsleistung in die Hochdruckstufe 48 der Dampfturbine 6 geleitet wird. Durch zwei Ventile 104, 106 sind die beiden Heizeinheiten 98, 100 mit Hilfe einer nicht dargestellten Steuereinheit getrennt voneinander betreibbar.

Dampfeingangsseitig ist die Heizeinheit 100 mit der Hochdruckstufe 66 des Abhitzedampferzeugers 16 verbunden. Die Heizeinheit 98 ist dampfeingangsseitig mit der Zwischenüberhitzerleitung 86 verbunden, wodurch Dampf aus der Hochdruckstufe 66 und/oder der Mitteldruckstufe 64 in die Heizeinheit 98 eingespeist werden kann. Auf diese Weise können große Restwärmebereiche des Abhitzedampferzeugers 16 zur Ausspeicherung der Energie zum Hochfahren der Dampfturbine 6 verwendet werden. Dampfausgangsseitig sind die Heizeinheiten 98, 100 mit der Mitteldruckstufe 52 bzw. der Hochdruckstufe 48 der Dampfturbine 6 verbunden, so dass diese zum Zweck des schnellen Hochfahrens bzw. Anschleppens der Gasturbine über zwei Stufen mit Dampf beaufschlagt werden kann.

Wärmetauscher 108, 110 der Heizeinheiten 98, 100 können elektrisch betrieben sein oder, wie in FIG 2 dargestellt, durch eine Standbyheizung 112 zum Heizen des Abhitzedampferzeugers 16 während einer Betriebspause mit Wärme versorgt werden. Hierzu umfasst die Standbyheizung 112 einen Luftverdichter 114 und einen Brenner 116 zur Erzeugung heißen Abgases, das durch die beiden Wärmetauscher 108 und 110 und anschließend oder zuvor durch den Abhitzedampferzeuger 16 zur Abgabe von Wärmeenergie hindurchgeführt wird. Mittels einer nicht dargestellten Kreisleitung kann durch die Wärmetauscher 108, 110 hindurch getretenes Abgas zu den beiden Wärmetauschern 108, 110 rezirkuliert werden zur erneuten, effektiven Abgabe von Wärme.

Die Wärmetauscher 92, 108, 110 sind nicht in die Hauptdampfleitungen direkt eingebaut, um im regulären Betrieb nicht zu unnötigen Druckverlusten im Dampfsystem beizutragen, sondern jeweils ein einem eigenen Nebenstrang, der im regulären Betrieb totgeschaltet werden kann.

Alternativ ist denkbar, die Heizmittel 88, 96 zum Wärmebezug mit einer weiteren Wärmekraftanlage, beispielsweise einer weiteren Dampfturbinenanlage bzw. Gas- und Dampfturbinenanlage zu verbinden, so dass Wärme aus einer in Betrieb befindlichen Anlage zum Starten der Dampfturbinenanlage 2, 94 herangezogen werden kann. Diese Wärme kann aus einem Hilfsdampfsystem der benachbarten Anlage kommen. Ebenfalls einfach durchführbar ist die Verwendung von heißer Luft aus beispielsweise der Endstufe eines Gasturbinenkompressors der Nachbaranlage. Besonders Ressourcen schonend ist die Verwendung einer Solaranlage, beispielsweise mit Parabolspiegeln, zur Erwärmung des Heizmittels 88, 96. Auch eine Kombination aus Wärmetauscher 92, 108, 110 und Wärmespeicher ist vorteilhaft sein, wenn dies eine kostengünstige Ausgestaltung der Systemlösung mit der Dampfturbinenanlage 2, 94 ergibt.

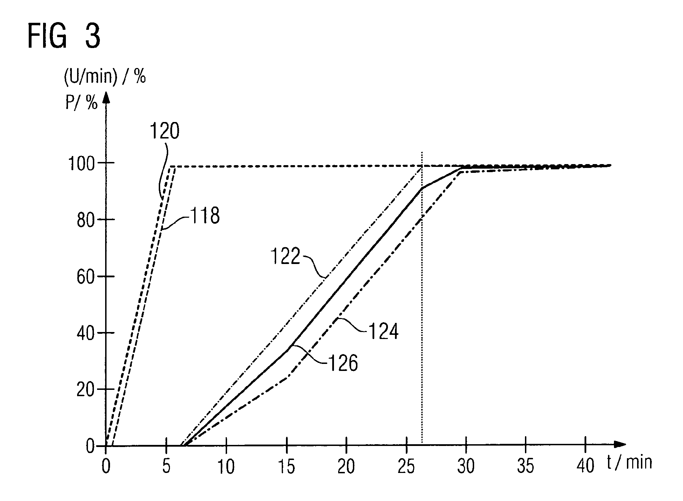

FIG 3 zeigt ein Diagramm, auf dem die Drehzahl 118 der Dampfturbine 6 und die Drehzahl 120 der Verbrennungskraftmaschine 4 bzw. der Gasturbine in % gegen die Zeit eines Betriebsstarts der Dampfturbinenanlage 2 aufgetragen ist.

Nach einem ersten Ausspeichern von Energie aus dem Abhitzedampferzeuger 16 wird die Dampfturbine 6 hochgefahren, so dass deren Läufer aus der Ruhe beispielsweise linear bis zur Nenndrehzahl (100 %) beschleunigt wird. Synchron hierzu wird die Gasturbine hochgeschleppt, also mit gleicher Drehzahl gedreht, wobei diese bereits vor Erreichen der Nenndrehzahl gestartet werden kann. Die beiden Linien der Drehzahlen 118, 120 liegen also übereinander und sind lediglich der verdeutlichung halber etwas versetzt dargestellt.

Nachdem die Nenndrehzahl der beiden Aggregate nach etwa 6 Minuten erreicht ist (Drehzahlen 118, 120 = 100%), können die Aggregate mit Hilfe des Generators 10 belastet werden, wobei die Leistung 122 der Gasturbine kontinuierlich, insbesondere linear bis zur Nennlast gesteigert wird. Nach etwa 15 Minuten ist der Abhitzedampferzeuger 16 so weit erhitzt, dass die Leistung 124 der Dampfturbine 6 maximal gesteigert werden kann.

Bei Erreichung der Nennlast der Gasturbine ist der Betriebsstart der Dampfturbinenanlage 2 per Definition beendet, was durch eine gestrichelte Linie bei etwa 26 Minuten dargestellt ist. Etwa 4 Minuten später erreicht die Leistung 124 der Dampfturbine 6 im Wesentlichen die Nennlast, so dass die Leistung 126 der gesamten Anlage auf 100% voll zur Erzeugung elektrischer Energie herangezogen wird.

Alternativ können beide Aggregate gleichzeitig, oder etwas versetzt - wie in FIG 3 dargestellt - gestartet werden, so dass die Gasturbine mit einem Hilfsmittel angefahren wird kurz bevor die Dampfturbine 6 angefahren wird. Hierdurch kann ein besonders kurzer Betriebsstart erreicht werden.

## Patentansprüche

1. Verfahren zum Betriebsstart einer Dampfturbinenanlage (2, 94) mit einer Dampfturbine (6), einer Verbrennungskraftmaschine (4) und einem Abhitzedampferzeuger (16),
**dadurch gekennzeichnet, dass** Restwärme des Abhitzedampferzeugers (16), die von einem Betrieb der Dampfturbinenanlage (2, 94) vor einer Betriebspause der Dampfturbinenanlage (2, 94) stammt, nach der Betriebspause und vor einem Zuführen von Wärmeenergie von der Verbrennungskraftmaschine (4) zum Abhitzedampferzeuger (16) zur Dampferzeugung verwendet wird und mit dem Dampf die Dampfturbine (6) angefahren wird.

2. Verfahren nach Anspruch 1,
**dadurch gekennzeichnet, dass** der Dampf erzeugt wird, indem während der Betriebspause unter Druck im Abhitzedampferzeuger (16) gelagertes Wasser entspannt wird.

3. Verfahren nach Anspruch 1 oder 2,
**dadurch gekennzeichnet, dass** die Dampfturbine (6) eine Niederdruckstufe (54) und eine Stufe höheren Drucks aufweist und der erzeugte Dampf in die Niederdruckstufe (54) geleitet wird.

4. Verfahren nach einem der vorhergehenden Ansprüche,
**dadurch gekennzeichnet, dass** der Abhitzedampferzeuger (16) eine Niederdruckstufe (62) und eine Stufe höheren Drucks aufweist und die Restwärme zur Dampferzeugung von der Stufe höheren Drucks in die Niederdruckstufe (62) verschoben wird.

5. Verfahren nach einem der vorhergehenden Ansprüche,
**dadurch gekennzeichnet, dass** die Dampfturbine (6) die Verbrennungskraftmaschine (4) mit der Energie aus der Restwärme anfährt, insbesondere synchron anfährt.

6. Verfahren nach Anspruch 5,
**dadurch gekennzeichnet, dass** ein Läufer der Dampfturbine (6) während des Anfahrens mit einem Läufer der Verbrennungskraftmaschine (4) mittels einer Welle (8) starr verbunden ist.

7. Verfahren nach einem der vorhergehenden Ansprüche,
**dadurch gekennzeichnet, dass** die Dampfturbine (6) die Verbrennungskraftmaschine (4) unter Verwendung der Energie aus der Restwärme anfährt.

8. Verfahren nach einem der vorhergehenden Ansprüche,
**dadurch gekennzeichnet, dass** der aus der Restwärme erzeugte Dampf durch ein zum Abhitzedampferzeuger (16) zusätzliches Heizmittel (88, 96) überhitzt wird.

9. Verfahren nach Anspruch 8,
**dadurch gekennzeichnet, dass** der überhitzte Dampf einer Mitteldruckstufe (52) der Dampfturbine (6) zugeleitet wird.

10. Verfahren nach einem der vorhergehenden Ansprüche,
**dadurch gekennzeichnet, dass** der Dampf in einer Hochdruckstufe (66) des Abhitzedampferzeugers (16) erzeugt wird.

11. Verfahren nach einem der vorhergehenden Ansprüche,
**dadurch gekennzeichnet, dass** während der Betriebspause eine dem Abhitzedampferzeuger (16) im Rauchgasstrom der Verbrennungskraftmaschine (4) nachgeschaltete Abgasklappe (70, 72) zum Stoppen des Rauchgasstroms geschlossen ist.

12. Verfahren nach einem der vorhergehenden Ansprüche,
**dadurch gekennzeichnet, dass** während der Betriebspause die Verbrennungskraftmaschine (4) durchströmendes Gas aus einer von der Verbrennungskraftmaschine (4) zum Abhitzedampferzeuger (16) führenden Abgasleitung (14) abgezweigt wird zur Umgehung des Abhitzedampferzeugers (16).

13. Verfahren nach einem der vorhergehenden Ansprüche,
**dadurch gekennzeichnet, dass** dem Abhitzedampferzeuger (16) vor der Betriebspause über das für den eingestellten Betrieb der Dampfturbinenanlage (2) nötige Maß Wärme zugeführt wird und die Wärme zumindest im Wesentlichen bis zur Betriebspause im Abhitzedampferzeuger (16) gespeichert bleibt.

14. Dampfturbinenanlage (2, 94) mit einer Dampfturbine (6), einer Verbrennungskraftmaschine (4) und einem Abhitzedampferzeuger (16), der eine Dampfableitung (46) zur Dampfturbine (6) aufweist,
**gekennzeichnet durch** ein zum Abhitzedampferzeuger (16) zusätzliches Heizmittel (88, 96) zum Heizen von Dampf für die Dampfturbine (6), das dampfeingangsseitig mit der Dampfableitung (46) verbunden ist.

15. Dampfturbinenanlage (2, 94) nach Anspruch 14,
**dadurch gekennzeichnet, dass** das Heizmittel (88, 96) dampfausgangsseitig mit einer Dampfzuleitung (50) zu einem Mitteldruckteil (52) der Dampfturbine (6) verbunden ist.

16. Dampfturbinenanlage (2, 94) nach Anspruch 14 oder 15,
**dadurch gekennzeichnet, dass** die Dampfableitung (46) eine Leitung von einem Hochdrucküberhitzer (26) des Abhitzedampferzeugers (16) ist.

17. Dampfturbinenanlage (2, 94) nach einem der Ansprüche 14 bis 16,
**dadurch gekennzeichnet, dass** das Heizmittel (88, 96) dampfeingangsseitig mit einem Dampfbypass (80) zwischen einem Hochdrucküberhitzer (26) und einem Überhitzer einer niedrigeren Druckstufe des Abhitzedampferzeugers (16) verbunden ist.

18. Dampfturbinenanlage (2, 94) nach einem der Ansprüche 14 bis 17,
**dadurch gekennzeichnet, dass** das Heizmittel (88, 96) zwei unabhängig voneinander betreibbare Heizeinheiten (98, 100) aufweist, die dampfeingangsseitig mit unterschiedlichen Druckstufen des Abhitzedampferzeugers (16) verbunden sind.

19. Dampfturbinenanlage (2, 94) nach Anspruch 18,
**dadurch gekennzeichnet, dass** eine der Heizeinheiten (100) dampfseitig mit einer Dampfableitung (46) zu einer Hochdruckstufe (48) und die andere Heizeinheit (98) dampfseitig mit einer Dampfzuleitung (102) zu einer Mitteldruckstufe (52) der Dampfturbine (6) verbunden ist.

20. Dampfturbinenanlage (2, 94) nach einem der Ansprüche 14 bis 19,
**gekennzeichnet durch** eine Standbyheizung (112) zum Heizen des Abhitzedampferzeugers (16) während einer Betriebspause, wobei das Heizmittel (96) zum Wärmebezug mit der Standbyheizung (112) verbunden ist.

21. Dampfturbinenanlage (2, 94) nach einem der Ansprüche 14 bis 20,
**dadurch gekennzeichnet, dass** das Heizmittel (96) zum Wärmebezug mit einer weiteren Wärmekraftanlage verbunden ist.

22. Dampfturbinenanlage (2, 94) nach einem der Ansprüche 14 bis 21,
**gekennzeichnet durch** einen Abgasauslass aus einer von der Verbrennungskraftmaschine (4) zum Abhitzedampferzeuger (16) führenden Abgasleitung (14).

23. Dampfturbinenanlage (2, 94) nach einem der Ansprüche 14 bis 22,
**gekennzeichnet durch** Verschlussmittel zum - mit Bezug zum Abgasstrom - beidseitigen Verschließen des Abhitzedampferzeugers (16) während einer Betriebspause.
